# FASCICULE DE BREVET EUROPEEN

(11) **EP 3 381 754 B1**
(45) Date de publication et mention de la délivrance du brevet: **21.10.2020**
(21) Numéro de dépôt: 18164106.9
(22) Date de dépôt: 27.03.2018
(51) Int. Cl.: B60S 1/34

(54) **CAPUCHON ET BRAS PORTE-BALAI D'ESSUIE-GLACE POUR VEHICULE AUTOMOBILE**
KAPPE UND SCHEIBENWISCHERARM FÜR KRAFTFAHRZEUG
WINDSHIELD WIPER ARM AND CAP FOR AUTONOMOUS VEHICLE

(30) Priorité: 27.03.2017 FR 1752524
(43) Date de publication de la demande: 03.10.2018
(73) Titulaire: Valeo Systèmes d'Essuyage, 78322 Le Mesnil Saint Denis (FR)
(72) Inventeur: ROLLET, Sébastien, 63500 ISSOIRE (FR); PICOT, Philippe, 63500 ISSOIRE (FR)
(74) Mandataire: Valeo Vision

(56) Documents cités:
- EP-A1- 2 684 749
- DE-A1-102015 223 501
- FR-A1- 2 735 735
- JP-A- 2002 059 813

## Description

La présente invention se rapporte au domaine des dispositifs essuie-glace pour véhicules automobiles. Elle concerne plus particulièrement les dispositifs essuie-glace qui intègrent une fonction de distribution d'un liquide de nettoyage de la surface à essuyer.

Les véhicules automobiles sont couramment équipés de système d'essuie-glaces pour assurer un balayage et un lavage des surfaces vitrées, notamment des pare-brise avant et arrière du véhicule, et pour éviter que la vision qu'a le conducteur de son environnement ne soit perturbée. Ces essuie-glaces comportent classiquement des balais allongés, porteurs de lames racleuses réalisées en une matière élastique, entraînés en mouvement par un bras porte-balai auquel ils sont rattachés par un ensemble de connexion approprié, bras porte-balai qui est lui-même relié à un dispositif d'entraînement dans un mouvement de va-et-vient angulaire. Les lames racleuses frottent contre la surface vitrée et en évacuent l'eau et les salissures en les amenant en dehors du champ de vision du conducteur. Pour améliorer les performances d'un tel essuie-glace, il est intéressant de pouvoir amener, au plus près de la lame racleuse, un liquide de nettoyage de la surface à essuyer. Un tel liquide est stocké dans un réservoir situé sous le capot du véhicule, et il est acheminé, par l'intermédiaire d'un conduit souple, jusqu'au balai d'essuyage ou jusqu'au bras porte-balai, d'où il est distribué au plus près de la surface à nettoyer par un ensemble de distribution approprié. La problématique à résoudre est alors celle d'entraîner un conduit souple en mouvement avec la lame racleuse et/ou le bras porte-balai, sans risquer d'endommager ce conduit lors des mouvements de va-et-vient angulaire du bras porte-balai, et tout en maintenant l'arrivée de fluide au plus près de la surface à nettoyer/essuyer. EP-A-2684749 montre le préambule de la revendication 1.

Le but de la présente invention est de proposer un dispositif qui réponde à cette problématique, la fiabilité d'un tel dispositif étant un élément crucial pour son développement commercial.

Dans ce but, l'invention a pour objet un capuchon destiné à être accueilli sur un entraîneur d'un bras porte-balai d'un dispositif d'essuie-glace pour véhicule, comprenant au moins un moyen de coopération apte à solidariser le capuchon sur un moyen de fixation de l'entraîneur, comprenant au moins un moyen d'accueil d'un conduit de transport d'un fluide, ledit fluide étant de préférence acheminé vers un balai d'essuyage porté par le bras porte-balai ou vers des moyens de projections portés par le bras porte-balai. Avantageusement, le fluide considéré est un liquide de nettoyage d'une surface à essuyer.

Selon l'invention :
- le moyen d'accueil du conduit de transport de fluide consiste en une tranchée agencée dans une paroi supérieure du capuchon, ladite tranchée étant de préférence aménagée de manière ce que le conduit de transport de fluide soit affleurant avec la paroi supérieure du capuchon en position montée sur le capuchon,
- le capuchon comprend au moins un moyen de retenue du conduit de transport de fluide dans la tranchée,
- le moyen de retenue du conduit consiste au moins une avancée qui déborde d'un bord délimitant une ouverture de la tranchée,
- le moyen de retenue comprend une première avancée et une deuxième avancée agencées face à face sur chacun des bords délimitant une ouverture de la tranchée et s'étendant l'une vers l'autre de manière à former une obturation partielle de ladite ouverture. Avantageusement, le capuchon présente également l'une des caractéristiques suivantes :
- la tranchée présente une forme complémentaire à celle d'au moins une portion longitudinale du conduit de transport de fluide,
- le moyen de coopération consiste en au moins une saillie qui émerge d'une paroi intérieure d'une base constitutive du capuchon et qui s'étend dans un volume interne délimité par le capuchon,
- le capuchon comprend au moins une base ouverte en son extrémité inférieure et fermée en son extrémité supérieure par la paroi supérieure, ladite paroi supérieure accueillant le conduit de transport de fluide,
- la base est de forme cylindrique ou tronconique et la paroi supérieure est convexe, vue depuis le dessus du capuchon. Vue depuis le volume interne du capuchon, la paroi supérieure est concave.

L'invention s'étend également à un dispositif d'essuie-glace comprenant au moins bras porte-balai et un capuchon tel que détaillé dans le présent document.

Avantageusement, le bras porte-balai comprend un entraîneur destiné à être fixé sur un arbre d'entraînement en rotation du bras porte-balai à l'aide d'un écrou de blocage, et dans lequel le moyen de coopération consiste en au moins une saillie qui émerge d'une paroi intérieure d'une base constitutive capuchon, ladite saillie étant dimensionnée de manière à venir en appui contre l'une des faces de l'écrou. La base est par exemple creuse.

Le dispositif ci-dessus incorpore aussi au moins conduit de transport d'un fluide dont au moins une portion longitudinale est insérée dans le moyen d'accueil ménagé dans une paroi supérieure du capuchon.

Selon un exemple de réalisation, l'entraîneur comprend au moins un orifice de passage par lequel le conduit de transport de fluide passe pour s'étendre longitudinalement le long du bras porte-balai, notamment entre le bras porte-balai et une grille de pied de pare-brise.

D'autres caractéristiques, détails et avantages de l'invention ressortiront plus clairement à la lecture de la description donnée ci-après à titre indicatif, en relation avec les figures suivantes :
- la figure 1 est une vue schématique en perspective de la partie supérieure d'un capuchon selon un mode de réalisation de l'invention,
- la figure 2 est une vue en perspective coupée d'un capuchon selon l'invention, placé sur l'entraîneur d'un bras porte-balai, et
- la figure 3 est une vue générale de dessus d'un capuchon monté sur un bras porte-balai sur lequel est fixé un conduit de transport de fluide.

Il faut tout d'abord noter que si les figures exposent l'invention de manière détaillée pour sa mise en œuvre, lesdites figures peuvent bien entendu servir à mieux définir l'invention le cas échéant.

Dans la suite de la description, les dénominations longitudinales ou latérales, sont définies par rapport à l'orientation du bras porte-balai. La direction longitudinale correspond à l'axe principal du bras porte-balai, dans laquelle il s'étend, et les orientations latérales croisent la direction longitudinale, notamment perpendiculairement à l'axe longitudinal du bras porte-balai. Les dénominations dessus, dessous sont définies par rapport à la vision de l'utilisateur lorsque le bras porte-balai est installé sur le véhicule, la vision de dessus correspondant à celle visible depuis l'extérieur du véhicule. Les directions référencées comme supérieures ou inférieures et les orientations haut et bas sont définies par rapport à l'axe d'entraînement du bras porte-balai, la dénomination inférieure contenant la surface à essuyer.

Les directions évoquées ci-dessus sont également visibles dans un repère orthonormé OXYZ représenté sur les figures.

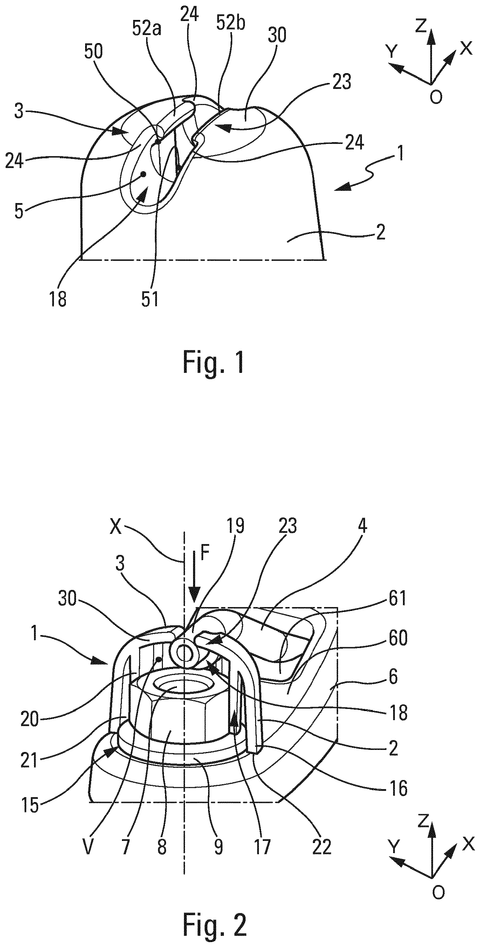

En référence aux figures 1 et 2, un capuchon 1 selon un mode de réalisation de l'invention comprend une base 2 de forme générale cylindrique formée par une portion cylindre. Cette base 2 est également creuse et ouverte en sa partie inférieure. Une partie supérieure de cette base 2 est quant à elle fermée. Cette partie supérieure prend la forme d'une paroi supérieure 3, de forme générale par exemple convexe. Plus précisément, la forme convexe de la paroi supérieure 3 est bombée de sorte à s'étendre à l'opposé du volume intérieur creux V délimité par le capuchon 1. On comprend ici que la paroi supérieure 3 s'étend vers l'extérieur et vers le haut du capuchon 1, en référence aux orientations définies plus haut.

Alternativement, la base 2 peut être de forme tronconique et présenter un diamètre plus large en partie inférieure.

Selon une alternative, la paroi supérieure 3 peut être de forme concave. Dans un tel cas, la paroi supérieure 3 forme une cuvette, vue par le dessus du capuchon 1.

Dans un cas comme dans l'autre, les angles formés à la jonction de la base 2 avec la paroi supérieure 3 prennent la forme d'arrondi. On évite ainsi la présence d'arête vive que la réglementation en matière de choc piéton interdit.

Avantageusement, le capuchon 1 est réalisé dans un matériau polymère présentant à la fois une rigidité et une élasticité appropriées pour permettre sa mise en place et sa tenue, ainsi qu'il sera détaillé dans la suite de la présente description.

Selon l'invention, un moyen d'accueil 18 d'un conduit 4 de transport de fluide est agencé dans la paroi supérieure 3 du capuchon 1.

Selon le mode de réalisation illustré par les figures, le moyen d'accueil 18 prend la forme d'une tranchée 5 dont la forme est par exemple complémentaire de celle d'une portion longitudinale 19 d'un tel conduit. Plus précisément, la tranchée 5 a sensiblement la forme d'une portion de cylindre dont l'axe s'étend perpendiculairement à un axe de révolution de la base 2 du capuchon 1, et dont le diamètre est légèrement supérieur au diamètre extérieur du conduit 4 de transport de fluide, tel que représenté sur la figure 2.

Longitudinalement, la tranchée 5 s'étend sur la totalité du diamètre de la paroi supérieure 3 dans laquelle elle est agencée. Selon l'axe OZ, la tranchée 5 est avantageusement configurée au sommet de la forme, convexe ou concave, de la paroi supérieure 3 du capuchon 1 selon l'invention. La tranchée 5 est avantageusement configurée de telle manière qu'elle débouche, en sa partie supérieure, en une ouverture 50 au sommet d'une face supérieure 30 délimitant la paroi supérieure 3.

On notera que la tranchée 5 est configurée de telle manière que, lorsqu'un conduit 4 de transport de fluide est accueilli en son sein, une portion sommitale de la surface extérieure de celui-ci affleure la face supérieure 30 de la paroi supérieure 3 du capuchon 1. En d'autres termes, une fois un conduit 4 de transport de fluide accueilli dans la tranchée 5 du capuchon 1, ce conduit 4 ne s'étend pas plus haut que le sommet dudit capuchon 1. Encore en d'autres termes, l'encombrement du capuchon 1 reste le même, notamment en hauteur, que le capuchon reçoive ou pas le conduit 4.

Selon le mode de réalisation de l'invention plus particulièrement illustré par la figure 1, la tranchée 5 comprend, en sa partie inférieure, un trou 51 débouchant dans le volume interne V délimité par le capuchon 1. Selon d'autres modes de réalisation, l'épaisseur de la paroi supérieure 3 du capuchon 1 peut être choisie de telle manière que la tranchée 5 ne débouche pas, en sa partie inférieure, dans le volume interne V du capuchon 1. Dans un tel cas, la tranchée 5 comprend un fond qui s'étend de manière continue d'un côté à l'autre du capuchon 1.

Selon une caractéristique avantageuse de l'invention, les formes et dimensions de la tranchée 5 sont définies de telle manière qu'une fois accueilli en son sein, le conduit 4 de transport de fluide y soit retenu et ne puisse en être retiré que par une manœuvre volontaire d'un utilisateur. A cet effet, au moins un moyen de retenue 23 est configuré au niveau d'au moins un bord 24 délimitant l'ouverture 50.

Selon le mode de réalisation de l'invention représenté par les figures, ce moyen de retenue 23 prend la forme d'au moins une avancée, notamment d'une première avancée 52a et d'une deuxième avancée 52b débordant chacune d'un bord 24 délimitant l'ouverture 50. Ces avancées 52a et 52b peuvent être agencées symétriquement par rapport à la tranchée 5, au sommet de la face supérieure 30 de la paroi supérieure 3. Ainsi, la première avancée 52a et la deuxième avancée 52b peuvent être symétriques par rapport à un plan passant par l'axe de révolution du capuchon 1 et dans lequel la tranchée 5 s'étend longitudinalement. Une autre symétrie est également prévue par l'invention : la première avancée 52a et la deuxième avancée 52b peuvent être symétriques par rapport au plan passant par l'axe de révolution du capuchon 1 et perpendiculaire à l'axe longitudinal d'extension de la tranchée 5.

La première avancée 52a et la deuxième avancée 52b sont par exemple disposées face à face et de part et d'autre de l'ouverture 50. Les deux avancées 52a, 52b s'étendent ici l'une vers l'autre, réalisant ainsi, au sommet du capuchon 1 une obturation partielle de l'ouverture 50 de la tranchée 5. De faibles dimensions pour permettre l'introduction du conduit 4 au sein de la tranchée 5, la première avancée 52a et la deuxième avancée 52b permettent, une fois que le conduit 4 de transport de fluide est engagé dans cette tranchée 5, d'empêcher tout mouvement vers le haut de celui-ci et, ainsi, l'empêchent de sortir de la tranchée 5. La fonction de maintien du conduit 4 est ainsi réalisée.

Selon d'autres modes de réalisation de l'invention, la première avancée et la deuxième avancée peuvent ne pas être situées face à face de part et d'autre de l'ouverture 50 de la tranchée 5, mais être placées en quinconce au regard de cette ouverture 50, c'est-à-dire décalé le long de l'axe longitudinal de la tranchée, sans que cela nuise à l'invention. Cette solution est avantageuse car elle facilite l'insertion du conduit dans la tranchée, et maintient celui-ci sur approximativement toute la longueur longitudinale de la tranchée 5.

Selon d'autres modes de réalisation encore, une seule avancée peut être configurée dans l'un des bords 24 de la tranchée 5. Selon cette alternative, l'autre bord de la tranchée 5 est alors exempt d'avancée.

L'assemblage d'un conduit 4 de transport de fluide avec le capuchon 1 selon l'invention est réalisé par coopération d'une portion longitudinale 19 de ce conduit avec la tranchée 5, en exerçant, sur ledit conduit 4, une simple pression selon la direction et le sens représentés par la flèche F sur la figure 2. Sous l'effet de cette pression, et grâce à l'élasticité du matériau constituant le conduit 4, celui-ci se déforme et franchit la première avancée et la deuxième avancée, respectivement référencées 52a et 52b. Le conduit 4 s'insère alors dans la tranchée 5, où il est retenu par clipsage lorsque les première et deuxième avancées 52a, 52b recouvrent au moins en partie le conduit 4. Il est à noter qu'avantageusement, l'épaisseur et la forme de la section de la paroi supérieure 3, à l'endroit des première et deuxième avancées 52a, 52b, sont définies de telle manière que ces première et deuxième avancées 52a, 52b bénéficient d'une certaine rigidité, de manière à ne pas s'éloigner l'une de l'autre lors de l'insertion du conduit 4 dans la tranchée 5. Le conduit 4 peut également, s'il présente une extrémité libre, être introduit par celle-ci longitudinalement dans la tranchée 5, les première et deuxième avancées 52a, 52b, jouant alors un rôle de guidage du conduit 4 dans ladite tranchée 5.

Selon une autre caractéristique de l'invention, le capuchon 1 comporte également au moins un moyen de coopération 17 avec l'entraîneur 6 constitutif d'un bras 14 porte-balai d'essuie-glace. De manière plus précise, le moyen de coopération 17 relie ou solidarise, de manière réversible, le capuchon 1 à au moins un moyen de fixation 15 qui attache ce bras 14 à son dispositif d'entraînement en rotation.

Comme le montre de manière plus détaillée la figure 2, l'entraîneur 6 du bras 14 porte-balai d'essuie-glace comporte un trou par lequel un arbre 7 du dispositif d'entraînement en rotation passe. Cet arbre 7 est centré sur un axe X autour duquel le bras porte-balai 14 est entraîné dans son mouvement de va-et-vient angulaire. Selon le mode de réalisation représenté par les figures, l'arbre 7 est accueilli dans le trou ménagé dans l'entraîneur 6 du bras porte-balai 14, et il y est bloqué par le moyen de fixation 15. Ce dernier peut par exemple prendre la forme d'un écrou 8 et d'une rondelle 9. Selon le mode réalisation illustré ici, l'axe de révolution du capuchon 1 est confondu avec l'axe X de rotation du bras porte balai 14.

Selon l'invention, le capuchon 1 comporte le moyen de coopération 17 avec l'écrou 8 et avec la rondelle 9 ou, plus généralement, avec le moyen de fixation 15 de l'entraîneur 6 sur l'arbre 7. Il est tout d'abord à noter que, selon le mode de réalisation plus particulièrement illustré par les figures, l'épaisseur de la paroi de la base 2 du capuchon 1, ainsi que le diamètre extérieur de l'extrémité inférieure 16 de la base 2, sont définis de telle manière que la rondelle 9 peut être accueillie au sein du volume intérieur V délimité par le capuchon 1. En d'autres termes, le capuchon 1 peut être mis en place sur la rondelle 9 et accueillir cette dernière en totalité au sein de son volume intérieur V, une face inférieure 22 de la base 2 de ce capuchon 1 venant alors en appui sur une face supérieure 60 de l'entraîneur 6. Le capuchon 1 constitue ainsi une protection de l'ensemble formé par la rondelle 9 et par l'écrou 8, par exemple vis-à-vis de salissures, débris, ou projections d'eau de pluie provenant de l'extérieur.

Selon le mode de réalisation plus particulièrement illustré par la figure 2, le moyen de coopération 17 entre le capuchon 1 et le moyen de fixation 15 de l'entraîneur 6 sur l'arbre 7 comprend également au moins une saillie, et potentiellement une pluralité de saillies 20. Ces saillies 20 émergent de la paroi intérieure 21 de la base 2 du capuchon 1. En d'autres termes, ces saillies 20 forment des nervures issues de la paroi interne du capuchon 1, ces saillies s'étendant dans le volume interne V délimité par le capuchon 1.

Selon le mode de réalisation illustré par cette figure, la disposition de la saillie 20 est définie de telle manière que, une fois le capuchon 1 mis en place sur l'écrou 8 et sur la rondelle 9, au moins une saillie et avantageusement chacune des saillies 20 vient en appui contre l'une des faces de l'écrou 8. L'ensemble des saillies 20 forme ainsi un blocage radial du capuchon 1 sur l'écrou 8, l'extrémité inférieure de la base 2 formant un blocage radial du capuchon 1 autour de la rondelle 9. Plus généralement, l'invention propose qu'une ou plusieurs formes saillantes soient agencées à partir de la paroi intérieure 21 de la base 2, et que les dimensions de ces formes saillantes soient définies de telle manière que le capuchon 1, une fois mis en place sur le moyen de fixation 15, soit bloqué radialement par rapport à ce moyen de fixation.

Le capuchon 1 selon l'invention permet ainsi de réaliser à la fois un cache et une protection du moyen de fixation 15 de l'entraîneur 6, et plus généralement du bras porte balai 14, sur l'arbre 7 du dispositif d'entraînement, ainsi que l'accueil et le maintien en place d'un conduit souple 4 de transport d'un fluide jusqu'au balai d'essuyage proprement dit. Le conduit souple 4 peut également permettre d'acheminer le fluide vers des moyens de projections portés par le bras porte balai 14.

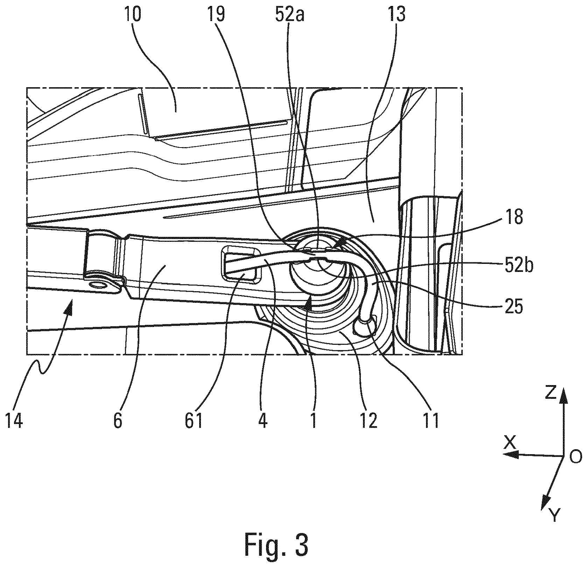

La figure 3 montre plus précisément, en vue de dessus, l'agencement du capuchon 1 avec le conduit 4 de transport de fluide et un bras porte-balai 14 implantés en pied d'une surface à essuyer 10 de type pare-brise. Sur cette figure sont représentés l'entraîneur 6 du bras porte-balai 14, c'est-à-dire sa partie la plus proche de son dispositif d'entraînement, le capuchon 1, et le conduit 4 de transport de fluide de nettoyage vers un balai d'essuie-glace non représenté attaché à l'extrémité opposée du bras porte-balai 14.

Le conduit 4 de transport de fluide émerge, par un orifice 11 ménagé dans un socle 12 d'une grille 13 de pied de pare-brise du véhicule, ledit conduit 4 amène le fluide contenu dans un dispositif de stockage placé sous un capot, par exemple. A travers le socle 12 émerge également l'arbre 7 de rotation du dispositif d'entraînement du bras porte-balai 14, cet arbre étant recouvert par le capuchon 1. Le conduit 4 est ensuite inséré dans la tranchée 5 agencée dans la paroi supérieure 3 du capuchon 1.

Avantageusement, le capuchon 1, préalablement mis en place sur le moyen de fixation de l'entraîneur 6, est orienté de telle manière que la tranchée 5 s'étende, selon son extension longitudinale, parallèlement à la direction longitudinale du bras porte-balai 14. Une fois inséré et maintenu dans la tranchée 5 grâce à la présence des première et deuxième avancées 52a, 52b, le conduit 4 de transport de fluide se trouve donc, en référence aux orientations définies plus haut, au-dessus du bras porte-balai 14.

Avantageusement, l'invention propose que le conduit 4 soit ensuite, en référence aux orientations définies plus haut, orienté vers le bas et inséré dans un orifice de passage 61 ménagé à cet effet dans l'entraîneur 6 du bras porte-balai 14, pour être acheminé vers le balai d'essuyage en passant sous le bras porte-balai 6, de manière à ce que le conduit 4 s'étende entre le bras porte-balai 14 et le grille 13 de pied de pare-brise.

Selon un mode de réalisation de l'invention, la distance entre le capuchon 1 et l'orifice de passage 61, mesurée selon l'axe longitudinal OX, est définie pour que le conduit 4, souple, une fois inséré et maintenu dans la tranchée 5, puisse être guidé à travers cet orifice de passage sans être plié et sans que lui soit imposée une courbure qui pourrait l'endommager ou nuire à son fonctionnement. Le conduit 4, dans son cheminement vers le balai d'essuyage, est alors ainsi protégé par le bras porte-balai 14 vis-à-vis d'éventuels chocs, et moins exposé aux salissures et/ou débris qui pourraient provenir de l'environnement extérieur.

On note que le capuchon 1 est rendu solidaire de l'entraîneur 6 grâce au moyen de coopération 17. Ceci permet de garantir une absence de mouvement entre le conduit 4 et l'entraîneur 6, garantissant ainsi l'intégrité du conduit en cette zone particulière. Le conduit 4 comprend une boucle 25 dédiée qui est conçue pour absorber le déplacement imposé par le capuchon 1, pendant le mouvement de va-et-vient du bras porte balai 14.

L'invention permet ainsi, par la présence du capuchon 1 tel que décrit plus haut de proposer une solution simple, fiable et d'un faible coût de réalisation pour protéger à la fois le moyen de fixation de l'entraîneur avec son dispositif d'entraînement et un conduit de transport d'un fluide de nettoyage jusqu'au balai d'essuyage proprement dit, où ce fluide pourra être distribué au plus près de la surface à essuyer, par exemple par le biais d'une ou plusieurs buses de distribution.

Il est également à noter que, tel qu'illustré par la figure 3, l'agencement proposé par l'invention est, au pied de la surface à essuyer, d'un faible encombrement extérieur et ne comporte, en outre, aucune arête vive qui pourrait causer un quelconque dommage lors d'un éventuel choc, par exemple avec un piéton.

L'invention ne saurait toutefois se réduire aux moyens et configurations décrits et illustrés, mais elle s'applique également à tous moyens ou configurations équivalents et à toute combinaison de tels moyens. En particulier, si la tranchée 5 est, dans ce qui a été précédemment décrit, configurée au sommet de la paroi supérieure 3 du capuchon 1 selon l'invention, elle peut, sans que cela nuise à l'invention, être configurée dans une autre région de cette paroi supérieure, ou même dans la paroi de la base de ce capuchon, afin, par exemple, d'adapter la géométrie de l'ensemble formé par le capuchon 1, l'entraîneur 6, et le conduit de transport de fluide 4, à des problématiques spécifiques d'encombrement et d'implantation en pied de surface à essuyer.

## Revendications

1. Capuchon (1) destiné à être accueilli sur un entraîneur (6) d'un bras porte-balai (14) d'un dispositif d'essuie-glace pour véhicule, comprenant au moins un moyen de coopération (17) apte à solidariser le capuchon (1) sur un moyen de fixation (15) de l'entraîneur (6), comprenant au moins un moyen d'accueil (18) d'un conduit (4) de transport d'un fluide, ledit fluide étant de préférence acheminé vers un balai d'essuyage porté par le bras porte-balai (14) ou vers des moyens de projections portés par le bras porte-balai (14), **caractérisé en ce qu'**il consiste en une tranchée (5) agencée dans une paroi supérieure (3) du capuchon (1), ladite tranchée étant de préférence aménagée de manière à ce que le conduit (4) de transport de fluide soit affleurant avec la paroi supérieure (3) du capuchon (1) en position montée sur le capuchon, le capuchon comprenant au moins un moyen de retenue (23) du conduit (4) de transport de fluide dans la tranchée (5) comprenant une première et une deuxième avancée (52a, 52b) agencées face à face sur chacun des bords (24) délimitant une ouverture (50) de la tranchée (5) et s'étendant l'une vers l'autre de manière à former une obturation partielle de ladite ouverture (50).

2. Capuchon (1) selon la revendication précédente, dans lequel la tranchée (5) présente une forme complémentaire à celle d'au moins une portion longitudinale (19) du conduit (4) de transport de fluide.

3. Capuchon (1) selon l'une quelconque des revendications précédentes, dans lequel le moyen de coopération (17) consiste en au moins une saillie (20) qui émerge d'une paroi intérieure (21) d'une base (2) constitutive du capuchon (1) et qui s'étend dans un volume interne (V) délimité par le capuchon (1).

4. Capuchon (1) selon l'une quelconque des revendications précedentes, comprenant une base (2) ouverte en son extrémité inférieure (16) et fermée en son extrémité supérieure par la paroi supérieure (3), ladite paroi supérieure (3) accueillant le conduit (4) de transport de fluide.

5. Capuchon (1) selon la revendication précédente, dans lequel la base (2) est de forme cylindrique ou tronconique et la paroi supérieure (3) est convexe, vue depuis le dessus du capuchon (1).

6. Dispositif d'essuie-glace comprenant au moins bras porte-balai (14) et un capuchon (1) selon l'une quelconque des revendications précédentes.

7. Dispositif d'essuie-glace selon la revendication 6, dans lequel le bras porte-balai (14) comprend un entraîneur (6) destiné à être fixé sur un arbre (7) d'entraînement en rotation du bras porte-balai (14) à l'aide d'un écrou (8) de blocage, et dans lequel le moyen de coopération (17) consiste en au moins une saillie (20) qui émerge d'une paroi intérieure (21) d'une base (2) constitutive capuchon (1), ladite saillie (20) étant dimensionnée de manière à venir en appui contre l'une des faces de l'écrou (8).

8. Dispositif d'essuie-glace selon la revendication 6 ou 7, comprenant au moins conduit (4) de transport d'un fluide dont au moins une portion longitudinale (19) est insérée dans le moyen d'accueil (18) ménagé dans une paroi supérieure (3) du capuchon (1).

9. Dispositif d'essuie-glace selon la revendication 7 ou 8, dans lequel l'entraîneur (6) comprend au moins un orifice de passage (61) par lequel le conduit (4) de transport de fluide passe pour s'étendre longitudinalement le long du bras porte-balai (14).

## Patentansprüche

1. Kappe (1), welche dazu bestimmt ist, auf einem Antriebselement (6) eines Wischerarmes (14) einer Scheibenwischvorrichtung für ein Fahrzeug aufgenommen zu werden, wenigstens ein Mittel zum Zusammenwirken (17) umfasst, das geeignet ist, die Kappe (1) auf einem Befestigungsmittel (15) des Antriebselements (6) fest anzubringen, und wenigstens ein Mittel zur Aufnahme (18) einer Leitung (4) für den Transport eines Fluids umfasst, wobei das Fluid vorzugsweise zu einem Wischblatt, das von dem Wischerarm (14) getragen wird, oder zu Spritzmitteln, die von dem Wischerarm (14) getragen werden, transportiert wird,
**dadurch gekennzeichnet, dass** sie aus einem Einschnitt (5) besteht, der in einer oberen Wand (3) der Kappe (1) angeordnet ist, wobei der Einschnitt vorzugsweise derart ausgebildet ist, dass die Leitung (4) für den Transport von Fluid in der auf der Kappe angebrachten Position mit der oberen Wand (3) der Kappe (1) bündig ist, wobei die Kappe wenigstens ein Mittel zum Halten (23) der Leitung (4) für den Transport von Fluid in dem Einschnitt (5) umfasst, das einen ersten und einen zweiten Vorsprung (52a, 52b) umfasst, die einander gegenüber an jeweils einem der Ränder (24) angeordnet sind, die eine Öffnung (50) des Einschnitts (5) begrenzen, und sich zueinander hin erstrecken, so dass sie einen teilweisen Verschluss der Öffnung (50) bilden.

2. Kappe (1) nach dem vorhergehenden Anspruch, wobei der Einschnitt (5) eine Form aufweist, die zu derjenigen wenigstens eines Längsabschnitts (19) der Leitung (4) für den Transport von Fluid komplementär ist.

3. Kappe (1) nach einem der vorhergehenden Ansprüche, wobei das Mittel zum Zusammenwirken (17) aus wenigstens einem Ansatz (20) besteht, welcher aus einer unteren Wand (21) eines Unterteils (2), das Bestandteil der Kappe (1) ist, herausragt und welcher sich in einem Innenvolumen (V) erstreckt, das von der Kappe (1) begrenzt wird.

4. Kappe (1) nach einem der vorhergehenden Ansprüche, welche ein Unterteil (2) umfasst, das an seinem unteren Ende (16) offen ist und an seinem oberen Ende durch die obere Wand (3) geschlossen ist, wobei die obere Wand (3) die Leitung (4) für den Transport von Fluid aufnimmt.

5. Kappe (1) nach dem vorhergehenden Anspruch, wobei das Unterteil (2) von zylindrischer Form oder kegelstumpfförmig ist und die obere Wand (3), von oberhalb der Kappe (1) gesehen, konvex ist.

6. Scheibenwischvorrichtung, welche wenigstens einen Wischerarm (14) und eine Kappe (1) nach einem der vorhergehenden Ansprüche umfasst.

7. Scheibenwischvorrichtung nach Anspruch 6, wobei der Wischerarm (14) ein Antriebselement (6) umfasst, das dazu bestimmt ist, auf einer Welle (7) zum Drehantrieb des Wischerarmes (14) mithilfe einer Sicherungsmutter (8) befestigt zu werden, und wobei das Mittel zum Zusammenwirken (17) aus wenigstens einem Ansatz (20) besteht, welcher aus einer unteren Wand (21) eines Unterteils (2), das Bestandteil der Kappe (1) ist, herausragt, wobei der Ansatz (20) so bemessen ist, dass er an einer der Seiten der Mutter (8) zur Anlage kommt.

8. Scheibenwischvorrichtung nach Anspruch 6 oder 7, welche wenigstens eine Leitung (4) für den Transport eines Fluids umfasst, von der wenigstens ein Längsabschnitt (19) in das Mittel zur Aufnahme (18) eingesetzt ist, das in einer oberen Wand (3) der Kappe (1) ausgebildet ist.

9. Scheibenwischvorrichtung nach Anspruch 7 oder 8, wobei Antriebselement (6) wenigstens eine Durchgangsöffnung (61) umfasst, durch welche die Leitung (4) für den Transport von Fluid hindurchführt, um sich entlang des Wischerarmes (14) in Längsrichtung zu erstrecken.

## Claims

1. Cap (1) intended to be accommodated on a driver (6) of a wiper arm (14) of a vehicle wiper device, comprising at least one collaboration means (17) able to attach the cap (1) to a fixing means (15) for fixing of the driver (6), comprising at least one accommodation means (18) for accommodating a fluid transport pipe (4), said fluid being preferably conducted towards a wiper blade borne by the wiper arm (14) or towards spray means borne by the wiper arm (14), **characterised in that** it consists of a trench (5) arranged in an upper wall (3) of the cap (1), said trench preferably being formed in such a way that the fluid transport pipe (4) lies flush with the upper wall (3) of the cap (1), the said trench preferably being formed in such a way that the fluid transport pipe (4) lies flush with the upper wall (3) of the cap (1) when mounted on the cap, the cap comprising at least one retaining means (23) for holding the fluid transport pipe (4) in the trench (5) comprising a first and second prominence (52a, 52b) arranged face to face on each of the edges (24) delimiting an opening (50) of the trench (5) and extending toward one another in order to form a partial occlusion of the said opening (50).

2. Cap (1) according to the preceding claim, in which the trench (5) has a shape that complements that of at least one longitudinal portion (19) of the fluid transport pipe (4).

3. Cap (1) according to any one of the preceding claims, in which the collaboration means (17) consists of at least one projection (20) which emerges from an interior wall (21) of a base (2) forming part of the cap (1) and which extends into an internal volume (V) delimited by the cap (1).

4. Cap (1) according to any one of the preceding claims, comprising a base (2) open at its lower end (16) and closed at its upper end by the upper wall (3), the said upper wall (3) accommodating the fluid transport pipe (4).

5. Cap (1) according to the preceding claim, in which the base (2) is of cylindrical or frustoconical shape and the upper wall (3) is convex, when viewed from the top of the cap (1).

6. Wiper device comprising at least a wiper arm (14) and a cap (1) according to any one of the preceding claims.

7. Wiper device according to Claim 6, in which the wiper arm (14) comprises a driver (6) intended to be fixed to a drive shaft (7) driving the rotation of the wiper arm (14) using a locking nut (8), and in which the collaboration means (17) consists of at least one projection (20) which emerges from an interior wall (21) of a base (2) forming part of the cap (1), the said projection (20) being dimensioned in such a way as to come to bear against one of the faces of the nut (8).

8. Wiper device according to Claim 6 or 7, comprising at least one fluid transport pipe (4) of which at least a longitudinal portion (19) is inserted into the accommodation means (18) formed in an upper wall (3) of the cap (1).

9. Wiper device according to Claim 7 or 8, in which the driver (6) comprises at least one passage orifice (61) via which the fluid transport pipe (4) passes in order to extend longitudinally along the wiper arm (14).
